# EUROPEAN PATENT APPLICATION

(11) **EP 4 560 652 A1**
(43) Date of publication of application: **28.05.2025**
(21) Application number: 24214302.2
(22) Date of filing: 20.11.2024
(51) Int. Cl.: H01B 7/14, H01B 7/22, H01B 7/24, H02G 1/14, H02G 15/08, H01B 7/18

(54) **A SUBMARINE POWER CABLE**

(30) Priority: 21.11.2023 EP 23211291
(71) Applicant: NKT HV Cables AB, 371 60 Lyckeby (SE)
(72) Inventor: HOLMBERG, Leif, Kalmar (SE); BENDIKSEN, Erik, Cary (US); TJAHJANTO, Denny, Sundbyberg (SE)
(74) Representative: Kransell & Wennborg KB

(57) **Abstract**

A submarine power cable (100) comprising a conductor (108) and an insulation system (109). The cable having a first cable section (102), a second cable section (104), and a joint region (112) between the first cable section (102) and the second cable section (104), and the conductor (108) having a conductor joint (110) in the joint region (112). The cable further comprising an armour (114) comprising a plurality of elongated elements arranged around the insulation system (109) the armour (114) comprising a first single layer armour layer (115). Wherein, in the cable sections (102, 104), the elongated elements of the first single layer armour layer (115) comprise a plurality of cable section armouring elements (116) and a plurality of filler elements (118), wherein, in the joint region (112), the elongated elements of the first single layer armour layer (115) comprise a plurality of joint region armouring elements (120), the stiffness of the first single layer armour layer (115) being higher in the joint region (112) than in the first and second cable sections (102, 104).

## Description

### Technical field

The present disclosure relates to a submarine power cable. In particular, the disclosure relates to a submarine power cable comprising an armour layer having an improved stiffness over a joint region of the power cable.

### Background

Submarine power cables may have an armour comprising a plurality of elongated armouring elements. The elongated armouring elements normally extend helically around a single core or multi-core of the submarine power cable. The armour provides mechanical protection against lateral impacts during installation and operation of the cable. The armour also provides tensional force for the cable laying. The armouring elements are typically made of a metal, such as steel, but may also be made of other materials.

There are some disadvantages of the conventional armouring. A submarine cable is typically laid out on the seabed using a cable laying vessel. If only metal, such as steel, is used the cable will become very heavy. This makes it difficult to lay out the cable, especially if the cable is a high voltage cable, and if the cable is to be laid in deep water. One way of reducing the weight of the armour is to substitute one or more of the heavy armouring elements with filler elements consisting of a lighter material. While the filler elements typically have a lower stiffness than the armouring elements, the weight of the power cable may be reduced which makes it easier to lay out the cable on the seabed. This also allows more cable to be loaded in the cable laying vessel. By exchanging some of the armouring elements for filler elements, a reduced cost may also be achieved.

### Summary

To be able to transfer energy over long distances, the submarine power cable may consist of a plurality of cable sections being jointed. It has been realized that during laying of the power cable, the cable may be become more exposed to damage in the region of these joints.

There is thus a need for an improved armored submarine power cable in which the risk of damage of the power cable is reduced.

In view of the above, an object of the present disclosure is to provide a submarine power cable comprising a conductor, and an insulation system arranged around the conductor. The submarine power cable having a first cable section, a second cable section, and a joint region between the first cable section and the second cable section, wherein the conductor has a conductor joint in the joint region. The submarine power cable further having an armour comprising a plurality of elongated elements arranged around the insulation system, and extending along the first cable section, the second cable section, and the joint region, the armour comprising a first single layer armour layer. Wherein, in the first and second cable sections, the elongated elements of the first single layer armour layer comprise a plurality of cable section armouring elements and a plurality of filler elements; wherein, in the joint region, the elongated elements of the first single layer armour layer comprise a plurality of joint region armouring elements being connected to the cable section armouring elements, the cable section armouring elements and the joint region armouring elements having a higher stiffness than the filler element; and wherein the stiffness of the first single layer armour layer is higher in the joint region than in the first and second cable sections.

The solution builds on the realization that, while the filler elements may reduce the weight and/or cost of the power cable which may for example be beneficial during laying of the cable, the stiffness of the armour may be improved at the joint by using less filler strands in the joint region. Thus, by providing a cable armour layer having a higher stiffness at the joint region than at the cable sections, and in which the armour at the cable sections comprises filler elements, a cable armour can be provided which combines the benefits of the filler elements, such as a reduced total weight, with a reduced risk of damage at the joint region.

The stiffness of the first single layer armour layer refers to the total stiffness of the armour layer in a cable section or joint region.

The stiffness of the armour layer may for example be determined by testing the combined stiffness of the cable conductor and the cable armour in the cable section or joint region, and by analyzing the results from said testing using calculation tools for obtaining the stiffness of the armour layer only.

Alternatively, the stiffness of the first single layer armour layer may be determined based on the stiffness of each of the elongated elements making up the armour of the specific cable section or joint region.

Another benefit of substituting some of the armouring elements for filler elements at the cable sections may be a reduced cost of the submarine power cable.

The increased stiffness at the joint region may thus be achieved by providing a higher number of joint region armouring elements in the joint region than of cable section armouring elements in the first and second cable sections respectively, such that the ratio of armouring elements over filler elements is higher in the joint region than in the cable sections.

Alternatively, or additionally, the higher stiffness in the joint region may be achieved by providing the joint region armouring elements with a material having a higher stiffness than the material of the cable section armouring elements and/or by providing the joint region armouring elements with a larger cross section area than the cable section armouring elements. For example, the joint region armouring elements may comprise aramid fibers.

A further way to improve the bending stiffness over the joint region may include providing the joint region armouring elements with a different cross-section than the cable section armouring elements, such as an oval, circular, rectangular or square cross-section.

Yet a further alternative may be to adjust the lay length of the joint region armouring elements in relation to the cable section armouring elements, to improve the stiffness at the joint region.

According one embodiment, the first single layer armour layer in the joint region is formed by at least 70% of joint region armouring elements.

Hereby, a majority of the elongated elements at the joint region consists of higher stiffness armouring elements, thus protecting the cable in the joint region.

According one embodiment the first single layer armour layer in the joint region is formed by 100% of joint region armouring elements.

Hereby, the entire armour at the joint region consists of higher stiffness armouring elements, thus providing very good protection for the submarine power cable in the joint region.

According to one embodiment, the submarine power cable further comprises first and second connecting elements, the first and second connecting elements being arranged to connect the cable section armouring elements to the joint region armouring elements.

Hereby, the connection between the armouring elements in the joint region and the armouring elements in the cable sections may be facilitated. This may be particularly relevant when the number of armouring elements in the joint region is different from the number of armouring elements in the cable sections, due to the inclusion of filler elements in the cable sections, or when the armouring elements of the cable sections and the joint region comprise different materials.

According to one embodiment, the connecting elements are welded to the cable section armouring elements and/or to the joint region armouring elements.

A connecting element which allows for welding of the armouring elements to the connecting element, such as a welding ring, may provide a strong and durable connection for armouring elements comprising metal.

According to one embodiment the connecting elements are adapted to be crimped onto the cable section armouring elements and the joint region armouring elements.

Hereby, a strong connection could be achieved even in the cases where the armouring elements comprise other materials than metal, such as aramid fibers, which may not be as suitable for welding.

In an alternative embodiment, the armouring elements could be connected by air splicing. This method is especially suitable when the armouring elements comprise fibers, and includes directing a flow of air towards the fibers such that they get entangled into each other.

In an alternative embodiment, the armouring elements could be connected by knots. This may for example be obtained by directly tying the armouring strands to each other, or by providing a connecting element with loops or openings to which the armouring elements could be tied.

In an alternative embodiment, the armouring elements could be connected using adhesives, such as by adhering the armouring elements to a connecting element.

In an alternative embodiment, the armouring elements could be connected by rigging screws.

According to one embodiment, the joint region comprises a flexible joint, the conductor joint forming part of the flexible joint.

Flexible joints are also known as factory joints or flexible vulcanized joints. When producing a flexible joint, the power cable ends are first denuded of all external layers, and then the exposed conductors are electrically and mechanically connected to each other, typically by welding. Thereafter, each layer of the insulation system is successively restored. The cable is thus recreated at the joint by building it from the inside out, restoring each layer of the cable. While this provides a joint which is very flexible as it does not include any rigid box attached over the joint, the process of restoring the joint is complex and there is thus a risk that weak areas occur in the joint region, such as at the conductor weld. Therefore, the present solution may be particularly relevant for submarine power cables comprising flexible joints.

According to one embodiment, the filler elements are composed of a material having a lower density than the material of the armouring elements.

Hereby, the filler elements can be made lighter than the armouring elements, whereby the total weight of the cable may be reduced.

According to one embodiment, the filler elements comprise polyethylene.

Hereby, lightweight filler elements may be provided to a relatively low cost.

According to one embodiment, the cable section armouring elements and/or the joint region armouring elements comprise steel.

Hereby, a durable armouring may be achieved which may provide both mechanical protection and stiffness to the submarine power cable.

According to one embodiment, the cable section armouring elements and/or the joint region armouring elements comprise synthetic fibers, such as aramid fibers.

Hereby, an armour with a very high stiffness may be achieved.

According to one embodiment, the elongated elements of the armour are helically wound.

Hereby, a high strength and stiffness may be achieved by the armour.

According to one embodiment, the armour comprises a second single layer armour layer arranged radially around the first single layer armour layer, the first and second single layer armour layers being helically wound in opposing directions.

Hereby, by providing a second single layer armour layer, a much stronger protection towards external force may be provided. Furthermore, by arranging the two single layer armour layers such that they are helically wound in different directions, the torsional forces of each layer may counterbalance or even cancel out each other, thus achieving a torque-balanced armour.

According to one embodiment, the filler elements are fixated by cable straps in proximity to the joint region.

The joint region is defined as a region which comprises the conductor joint. The joint region may extend several meters, such as at least 1-5 meters, in each direction from the conductor joint. The joint region might be defined as a region of a flexible joint in which the insulation system of the cable has been restored.

Hereby, as the primary function of the filler elements is to act as spacers between the armouring elements, e.g. for lowering the weight of the submarine power cable, the filler elements do not need to be connected to the joint region armour layer or the connecting elements. Instead, the filler elements may be cut off in proximity to the joint and fixated there in any suitable way such as by cable straps. A quick and simple fixation of the filler elements may thus be achieved.

In alternative embodiments, the filler elements could be fixated by any other means such as by friction clamp straps, tying, or air splicing.

According to one embodiment, 40-60 % of the elements in the first and/or second cable section are filler elements.

Hereby, the weight and/or the cost of the armour at the cable sections may be substantially reduced as compared to a conventional armour with no filler elements.

According to one embodiment, the submarine power cable is an AC submarine power cable.

According to a second aspect, a submarine power cable is provided, the submarine power cable comprising a conductor, and an insulation system arranged around the conductor. The submarine power cable having a first cable section, a second cable section, and a joint region between the first cable section and the second cable section, wherein the conductor has a conductor joint in the joint region. The submarine power cable further having an armour comprising a plurality of elongated elements arranged around the insulation system, and extending along the first cable section, the second cable section, and the joint region, the armour comprising a first single layer armour layer. Wherein, in the first and second cable sections, the elongated elements of the first single layer armour layer comprise a plurality of cable section armouring elements and a plurality of filler elements; wherein, in the joint region, the elongated elements of the first single layer armour layer comprise a plurality of joint region armouring elements being connected to the cable section armouring elements, the cable section armouring elements and the joint region armouring elements having a higher tensile strength than the filler element; and wherein the tensional strength of the first single layer armour layer is higher in the joint region than in the first and second cable sections.

The solution builds on the realization that, while the filler elements may reduce the weight and/or cost of the power cable which may for example be beneficial during laying of the cable, the tensional strength of the armour may be improved at the joint by using less filler strands in the joint region. Thus, by providing a cable armour layer having a higher tensional strength at the joint region than at the cable sections, and in which the armour at the cable sections comprises filler elements, a cable armour can be provided which combines the benefits of the filler elements, such as a reduced total weight, with a reduced risk of damage at the joint region.

The tensional strength of the first single layer armour layer refers to the total tensional strength of the armour layer in a cable section or joint region.

The tensional strength of the armour layer may for example be determined by testing the combined tensional strength of the cable conductor and the cable armour in the cable section or joint region, and by analyzing the results from said testing using calculation tools for obtaining the tensional strength of the armour layer only.

Alternatively, the tensional strength of the first single layer armour layer may be determined based on the tensile strength of each of the elongated elements making up the armour of the specific cable section or joint region.

Another benefit of substituting some of the armouring elements for filler elements at the cable sections may be a reduced cost of the submarine power cable.

The increased tensional strength at the joint region may thus be achieved by providing a higher number of joint region armouring elements in the joint region than of cable section armouring elements in the first and second cable sections respectively, such that the ratio of armouring elements over filler elements is higher in the joint region than in the cable sections.

Alternatively, or additionally, the higher tensional strength in the joint region may be achieved by providing the joint region armouring elements with a material having a higher tensile strength than the material of the cable section armouring elements and/or by providing the joint region armouring elements with a larger cross section area than the cable section armouring elements. For example, the joint region armouring elements may comprise aramid fibers.

A further way to improve the tensional strength and bending stiffness over the joint region may include providing the joint region armouring elements with a different cross-section than the cable section armouring elements, such as an oval, circular, rectangular or square cross-section.

Yet a further alternative may be to adjust the lay length of the joint region armouring elements in relation to the cable section armouring elements, to improve the strength at the joint region.

According one embodiment, the first single layer armour layer in the joint region is formed by at least 70% of joint region armouring elements.

Hereby, a majority of the elongated elements at the joint region consists of higher strength armouring elements, thus protecting the cable in the joint region.

According one embodiment the first single layer armour layer in the joint region is formed by 100% of joint region armouring elements.

Hereby, the entire armour at the joint region consists of higher strength armouring elements, thus providing very good protection for the submarine power cable in the joint region.

According to one embodiment, the submarine power cable further comprises first and second connecting elements, the first and second connecting elements being arranged to connect the cable section armouring elements to the joint region armouring elements.

Hereby, the connection between the armouring elements in the joint region and the armouring elements in the cable sections may be facilitated. This may be particularly relevant when the number of armouring elements in the joint region is different from the number of armouring elements in the cable sections, due to the inclusion of filler elements in the cable sections, or when the armouring elements of the cable sections and the joint region comprise different materials.

According to one embodiment, the connecting elements are welded to the cable section armouring elements and/or to the joint region armouring elements.

A connecting element which allows for welding of the armouring elements to the connecting element, such as a welding ring, may provide a strong and durable connection for armouring elements comprising metal.

According to one embodiment the connecting elements are adapted to be crimped onto the cable section armouring elements and the joint region armouring elements.

Hereby, a strong connection could be achieved even in the cases where the armouring elements comprise other materials than metal, such as aramid fibers, which may not be as suitable for welding.

In an alternative embodiment, the armouring elements could be connected by air splicing. This method is especially suitable when the armouring elements comprise fibers, and includes directing a flow of air towards the fibers such that they get entangled into each other.

In an alternative embodiment, the armouring elements could be connected by knots. This may for example be obtained by directly tying the armouring strands to each other, or by providing a connecting element with loops or openings to which the armouring elements could be tied.

In an alternative embodiment, the armouring elements could be connected using adhesives, such as by adhering the armouring elements to a connecting element.

In an alternative embodiment, the armouring elements could be connected by rigging screws.

According to one embodiment, the joint region comprises a flexible joint, the conductor joint forming part of the flexible joint.

Flexible joints are also known as factory joints or flexible vulcanized joints. When producing a flexible joint, the power cable ends are first denuded of all external layers, and then the exposed conductors are electrically and mechanically connected to each other, typically by welding. Thereafter, each layer of the insulation system is successively restored. The cable is thus recreated at the joint by building it from the inside out, restoring each layer of the cable. While this provides a joint which is very flexible as it does not include any rigid box attached over the joint, the process of restoring the joint is complex and there is thus a risk that weak areas occur in the joint region, such as at the conductor weld. Therefore, the present solution may be particularly relevant for submarine power cables comprising flexible joints.

According to one embodiment, the filler elements are composed of a material having a lower density than the material of the armouring elements.

Hereby, the filler elements can be made lighter than the armouring elements, whereby the total weight of the cable may be reduced.

According to one embodiment, the filler elements comprise polyethylene.

Hereby, lightweight filler elements may be provided to a relatively low cost.

According to one embodiment, the cable section armouring elements and/or the joint region armouring elements comprise steel.

Hereby, a durable armouring may be achieved which may provide both mechanical protection and tensional strength to the submarine power cable.

According to one embodiment, the cable section armouring elements and/or the joint region armouring elements comprise synthetic fibers, such as aramid fibers.

Hereby, an armour with a very high tensional strength may be achieved.

According to one embodiment, the elongated elements of the armour are helically wound.

Hereby, a high tensile strength may be achieved by the armour.

According to one embodiment, the armour comprises a second single layer armour layer arranged radially around the first single layer armour layer, the first and second single layer armour layers being helically wound in opposing directions.

Hereby, by providing a second single layer armour layer, a much stronger protection towards external force may be provided. Furthermore, by arranging the two single layer armour layers such that they are helically wound in different directions, the torsional forces of each layer may counterbalance or even cancel out each other, thus achieving a torque-balanced armour.

According to one embodiment, the filler elements are fixated by cable straps in proximity to the joint region.

The joint region is defined as a region which comprises the conductor joint. The joint region may extend several meters, such as at least 1-5 meters, in each direction from the conductor joint. The joint region might be defined as a region of a flexible joint in which the insulation system of the cable has been restored.

Hereby, as the primary function of the filler elements is to act as spacers between the armouring elements, e.g. for lowering the weight of the submarine power cable, the filler elements do not need to be connected to the joint region armour layer or the connecting elements. Instead, the filler elements may be cut off in proximity to the joint and fixated there in any suitable way such as by cable straps. A quick and simple fixation of the filler elements may thus be achieved.

In alternative embodiments, the filler elements could be fixated by any other means such as by friction clamp straps, tying, or air splicing.

According to one embodiment, 40-60 % of the elements in the first and/or second cable section are filler elements.

Hereby, the weight and/or the cost of the armour at the cable sections may be substantially reduced as compared to a conventional armour with no filler elements.

According to one embodiment, the submarine power cable is an AC submarine power cable.

### Brief Description of the Drawings

These and other aspects of the present inventive concept will now be described in more detail, with reference to the appended drawings showing example embodiments of the inventive concept, wherein:
Fig. 1 schematically illustrates a submarine power cable according to an embodiment.
Fig. 2 schematically illustrates a cross-section of the submarine power cable of Fig. 1 at section A-A.
Fig. 3 schematically illustrates a cross-section the submarine power cable of Fig. 1 at section B-B.
Fig. 4 schematically illustrates a submarine power cable according to an alternative embodiment.

### Detailed Description of Example Embodiments

In the present detailed description, various embodiments of the disclosure are described.

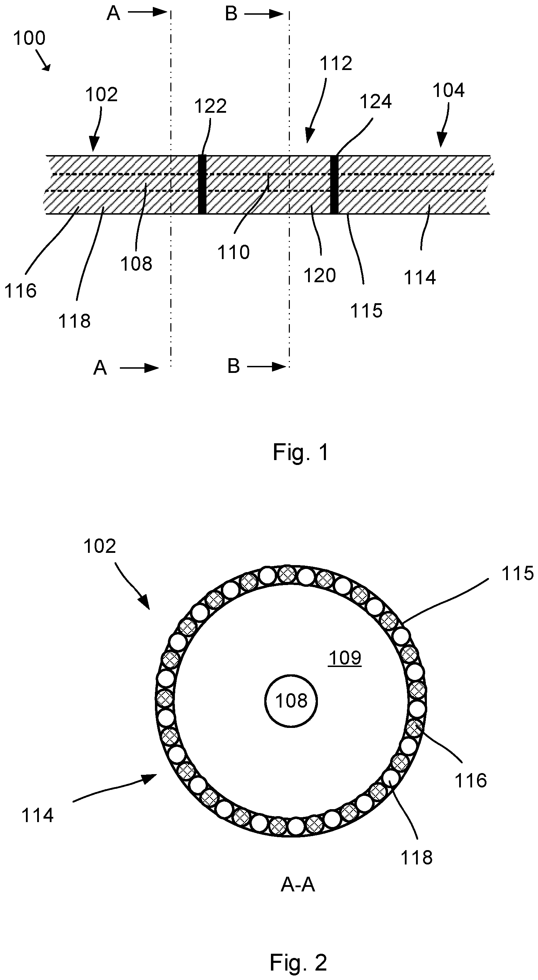

Fig. 1 schematically illustrates a submarine power cable 100 according to an embodiment of the present disclosure.

The submarine power cable 100 may be a DC submarine power cable, or an AC submarine power cable comprising one or more power cores.

The submarine power cable 100 comprises a first cable section 102, a second cable section 104 and a joint region 112 between the first cable section 102 and the second cable section 104. The submarine power cable 100 further comprises a conductor 108 having a conductor joint 110 between the first cable section 102 and the section cable section 104. The joint region 112 is thus defined as a region which comprises the conductor joint 110. The joint region 112 may extend several meters, such as at least 1-5 meters, in each direction from the conductor joint 110.

The conductor 108 is surrounded by an insulation system 109. The insulation system 109 may comprise an inner semiconductive layer arranged around the conductor. The insulation system may comprise an insulation layer arranged around the inner semiconductive layer. The insulation layer may for example comprise cross-linked polyethylene (XLPE), impregnated paper tapes, or polypropylene. The insulation system may comprise an outer semiconductive layer arranged around the insulation layer.

The submarine power cable 100 further comprises an armour 114 surrounding the insulation system 109. The armour 114 comprises a first single layer armour layer 115. The armour 114 provides mechanical protection to the submarine power cable 100.

The first single layer armour layer 115 comprises a plurality of elongated elements laid helically along the axial direction of the submarine power cable 100. The expression "single layer" means that the first single layer armour layer 115 only comprises one layer of elongated elements. This does not exclude cables in which the armour 114 comprises a plurality of single layer armour layers, but only specifies that the single layer armour layer 115 does not include more than one layer of elongated elements.

The first single layer armour layer 115 at the first and second cable sections 102, 104 comprises a plurality of cable section armouring elements 116 and a plurality of filler elements 118. The cable section armouring elements 116 aims at protecting the submarine power cable 100 by providing it with mechanical protection. The cable section armouring elements 116 may thus comprise a high stiffness material, such as steel, e.g., galvanized steel or stainless steel.

The filler elements 118 have a lower stiffness than the armouring elements 116 and fills out the spaces between the cable section armouring elements 116. One or more filler elements 118 may be arranged between a pair of subsequent cable section armouring element 116. It is also possible to only arrange filler elements 118 between some of the cable section armouring elements, such as between every second cable section armouring element 116.

The filler elements 118 thus allows for a reduced number of armouring elements 116 at the cable sections 102, 104, which may reduce the total weight of the submarine power cable 100. The filler elements 118 could for example comprise a polymer material, such as polyethylene.

The first single layer armouring layer 115 further comprises, at the joint region 112, a plurality of joint region armouring elements 120. The joint region armouring elements 120 have a higher stiffness than the filler elements 118. The joint region armouring elements 120 may comprise the same material as the cable section armouring elements 116. For example, the joint region armouring elements 120 may comprise steel. However, it is also possible for the joint region armouring elements to comprise a material different from the material of the cable section armouring elements 116.

The first single layer armour layer 115 in the joint region 112 is configured such that the first single armour layer 115 has a higher stiffness in the joint region 112 than in the first and second cable sections 102, 104. This may be achieved by providing a higher number of joint region armouring elements 120 in the joint region 112 than of cable section armouring elements 116 in the first and second cable sections 102, 104 respectively, such that the ratio of armouring elements over filler elements is higher in the joint region 112 than in the cable sections 102, 104.

Alternatively, or additionally, the higher stiffness in the joint region 112 may be achieved by providing the joint region armouring elements 120 with a material having a higher stiffness than the material of the cable section armouring elements 116 and/or by providing the joint region armouring elements with a larger cross section area than the cable section armouring elements 116. For example, the joint region armouring elements 120 may comprise aramid fibers.

A further way to improve the bending stiffness over the joint region 112 may include providing the joint region armouring elements with a different cross-section than the cable section armouring elements 116, such as an oval, rectangular or square cross-section.

Yet a further alternative may be to adjust the lay length of the joint region armouring elements 120 in relation to the cable section armouring elements 116, to improve the stiffness at the joint region 112.

Fig. 2 shows how the armour 114, comprising the first single layer armour layer 115, is arranged around the insulation system 109 in the first cable section 102 at cross-section A-A. The first single layer armour layer 115 of the first section 102 comprises a plurality of cable section armouring elements 116 and a plurality of filler elements 118. In the embodiment shown in Fig. 2 every second elongated element is a filler element 118. Thus, 50 % of the elongated elements are filler elements 118 and 50 % of the elements are cable section armouring elements 116.

In other embodiments, other configurations or ratios may be used. For example, a 4-4 configuration may be used, which still comprises a ratio of 50 % cable section armouring elements 116, but in which four cable section armouring elements 116 are followed by four filler elements 118.

In yet another embodiment, a 3-2 configuration may be used, in which three cable section armouring elements 116 are followed by two filler element 118, thus achieving a ratio of 60 % cable section armouring elements 116 over filler elements 118.

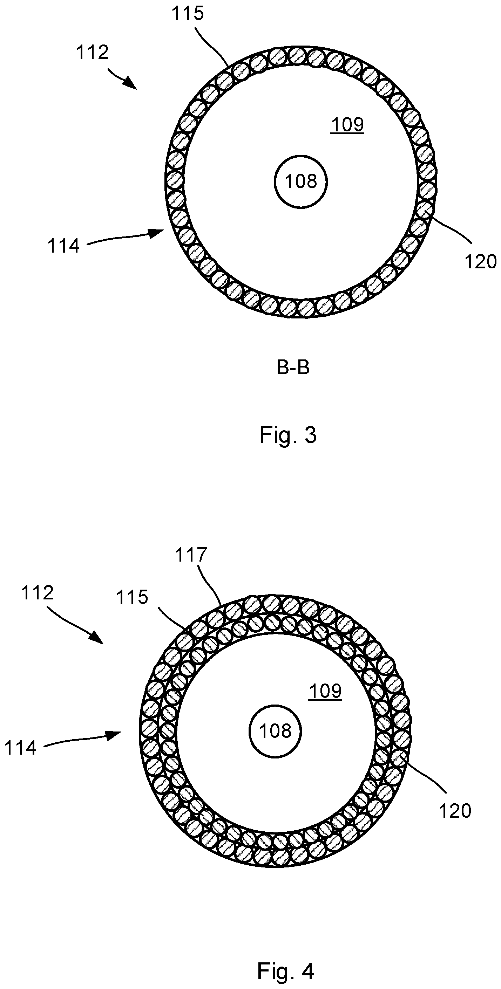

Fig. 3 shows a cross-section of the submarine power cable 100 at the joint region 112 at cross-section B-B. The first single layer armour layer 115 in the joint region 112 comprises a plurality of joint region armouring elements 120. In contrast to the first single layer armour layer 115 of the first cable section 102 shown in Fig. 2, the first single layer armour layer 115 in the joint region 112 of the illustrated embodiment comprises no filler elements 118. The first single layer armour layer 115 of the joint region 112 thus comprises 100 % joint region armouring elements 120. An increased stiffness may thus be achieved at the joint region 112, as the joint region armour elements 120 has a higher stiffness than the filler elements 118.

Turning again to Fig. 1, the submarine power cable 100 of the shown embodiment further comprises a first connecting element 122 and a second connecting element 124. Only the first connecting element 122 will be described below, but the second connecting element 124 generally has the same features.

The first connecting element 122 connects the armouring elements 116 of the first cable section 102 to the armouring elements 120 of the joint region 112. While it may be possible to connect the elongated elements of the joint region 112 and the first cable section 102 directly, e.g. via welding of each elongated element, it may be preferred to use a connecting element, especially as the material of the armouring elements 116, 120 and/or the number of armouring elements 116, 120 may differ between the first cable section 102 and the joint region 112.

The first connecting element 122 is illustrated as a welding ring. The welding ring is a rigid ring arranged around the submarine power cable 100 onto which the elongated elements 116, 120 are welded. The welding ring may comprise a first welding ring part having a perimeter surface for welding the cable section armouring elements 116 of the first cable section 102 thereto, and a second welding ring part having a perimeter surface for welding the joint region armouring elements 120 thereto. The first and second welding ring parts may be connected to each other in the axial direction by any suitable means, such as by screws.

In alternative embodiments, other connecting elements 122, 124 or connecting methods may be used, such as air splicing, tying or the use of adhesives.

Fig. 4 shows a cross-section of the submarine power cable 100 at the joint region 112 according to an alternative embodiment. In this embodiment, the armour 114 comprises a second single layer armour layer 117 arranged radially around the first single layer armour layer 115. Although not visible in Fig. 4, the second single layer armour layer 117, just as the first single layer armour layer 115, extends along the entire submarine power cable 100. The second single layer armour layer 117 is helically wound in a direction opposite to that of the first single layer armour layer 115. Thereby, the submarine power cable 100 may be torsionally balanced. The elongated elements of the second single layer armour layer 117 may comprise the same material as those of the first single layer armour layer 115. However, the elongated elements of the second single layer armour layer 117 may also comprise a material different from those of the first single layer armour layer 115.

Even though specific exemplifying embodiments have been described herein, many different alterations, modifications and the like within the scope of the claims will become apparent for those skilled in the art.

Additionally, variations to the disclosed embodiments can be understood and effected by the skilled person in practicing the claimed disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A submarine power cable (100) comprising:
a conductor (108), and an insulation system (109) arranged around the conductor,
the submarine power cable having a first cable section (102), a second cable section (104), and a joint region (112) between the first cable section (102) and the second cable section (104), wherein the conductor (108) has a conductor joint (110) in the joint region (112), and
an armour (114) comprising a plurality of elongated elements arranged around the insulation system (109), and extending along the first cable section (102), the second cable section (104), and the joint region (112), the armour (114) comprising a first single layer armour layer (115),
wherein, in the first and second cable sections (102, 104), the elongated elements of the first single layer armour layer (115) comprise a plurality of cable section armouring elements (116) and a plurality of filler elements (118),
wherein, in the joint region (112), the elongated elements of the first single layer armour layer (115) comprise a plurality of joint region armouring elements (120) being connected to the cable section armouring elements (116), the cable section armouring elements (116) and the joint region armouring elements (120) having a higher stiffness than the filler elements (118), and
wherein the stiffness of the first single layer armour layer (115) is higher in the joint region (112) than in the first and second cable sections (102, 104).

2. The submarine power cable according to claim 1, wherein the first single layer armour layer (115) in the joint region (112) is formed by at least 70% of joint region armouring elements (120).

3. The submarine power cable according to claim 1, wherein the first single layer armour layer (115) in the joint region (112) is formed by 100% of joint region armouring elements (120).

4. The submarine power cable (100) according to any one of claims 1-3 further comprising first and second connecting elements (122, 124), the first and second connecting elements (122, 124) being arranged to connect the cable section armouring elements (118) to the joint region armouring elements (120).

5. The submarine power cable of claim 4, wherein the connecting elements (122, 124) are welded to the cable section armouring elements (116) and/or to the joint region armouring elements (120).

6. The submarine power cable of claim 4, wherein the connecting elements (122, 124) are adapted to be crimped onto the cable section armouring elements (116) and the joint region armouring elements (120).

7. The submarine power cable according to any one of claims 1-6
wherein the joint region (112) comprises a flexible joint, the conductor joint (110) forming part of the flexible joint.

8. The submarine power cable according to any one of claims 1-7
wherein the filler elements (118) are composed of a material having a lower density than the material of the armouring elements (116, 120).

9. The submarine power cable according to any one of claims 1-8
wherein the filler elements (118) comprise polyethylene (PE).

10. The submarine power cable according to any one of claims 1-9
wherein the cable section armouring elements (116) and/or the joint region armouring elements (120) comprise steel.

11. The submarine power cable according to any one of claims 1-10
wherein the cable section armouring elements (116) and/or the joint region armouring elements (120) comprise synthetic fibers, such as aramid fibers.

12. The submarine power cable according to any one of claims 1-11
wherein the elongated elements (116, 118, 120) of the armour (114) are helically wound.

13. The submarine power cable according to any one of claims 1-12
wherein the armour (114) comprises a second single layer armour layer (117) arranged radially around the first single layer armour layer (115), the first and second single layer armour layers (115, 117) being helically wound in opposing directions.

14. The submarine power cable according to any one of claims 1-13
wherein the filler elements (118) are fixated by cable straps in proximity to the joint region (112).

15. The submarine power cable according to any one of claims 1-14
wherein 40-60% of the elements in the first and/or second cable section are filler elements (118).

16. The submarine power cable according to any of claims 1-15, wherein the submarine power cable is an AC submarine power cable.
